**Europäisches Patentamt**

**European Patent Office**

**Office européen des brevets**

(19)

(11) Numéro de publication: **0 103 518**
**B1**

# FASCICULE DE BREVET EUROPEEN

(12)

(45) Date de publication du fascicule du brevet:
**09.12.87**

(51) Int. Cl.⁴: **B 29 C 65/00,** F 16 B 11/00

(21) Numéro de dépôt: **83401764.2**

(22) Date de dépôt: **08.09.83**

(54) **Renfort métallique pour l'implantation dans un noeud d'une structure en matériau composite fibres-résins.**

(30) Priorité: **09.09.82 FR 8215276**

(43) Date de publication de la demande:
**21.03.84 Bulletin 84/12**

(45) Mention de la délivrance du brevet:
**09.12.87 Bulletin 87/50**

(84) Etats contractants désignés:
**DE GB IT**

(56) Documents cités:
**WO - A - 80/02254**
**FR - A - 981 411**
**FR - A - 2 440 831**
**FR - A - 2 457 997**
**GB - A - 2 015 923**
**US - A - 3 282 761**
**US - A - 3 436 102**

(73) Titulaire: **R. ALKAN & Cie., Rue du 8 mai 1945,**
**F-94460 Valenton (FR)**

(72) Inventeur: **Mattei, Jean-Pierre, 11 bis, rue Chevalier,**
**F-94210 La Varenne Saint Hilaire (FR)**
Inventeur: **Coutin, Pierre, 117, avenue Général Michel**
**Bizot, F-75012 Paris (FR)**

(74) Mandataire: **Hud, Robert et al, Cabinet**
**COLLIGNON 6, rue de Madrid, F-75008 Paris (FR)**

## Description

L'invention se rapporte au renforcement de structures de support réalisées en matériau composite fibres-résine, notamment en aéronautique pour la réalisation de poutres de mâts d'accrochage de charges sous avion ou hélicoptère.

Bien que les matériaux composites fibres-résine présentent les qualités de solidité et de légèreté qui justifient leur emploi dans de nombreuses réalisations, il est parfois nécessaire de leur incorporer localement des renforts métalliques dans des zones à forte concentration d'efforts, notamment pour favoriser l'assemblage de deux structures dont l'une au moins est constituée de matériaux composites.

Un renfort métallique selon le préambule de la revendication 1 est connu du document US-A-3 436 102. Ce document décrit la liaison, au moyen de résine, d'un renfort avec un flan en matériau composite et une paroi raccordée à ce flan.

La difficulté rencontrée pour obtenir une liaison suffisante entre les renforts métalliques et la structure est celle de recouvrir une surface suffisante de la partie métallique par les couches successives de fibres-résine, de façon à obtenir une liaison efficace.

Cette difficulté se relève particulièrement lorsqu'il s'agit de placer un renfort métallique dans un nœud d'une structure comportant un flan sur lequel se raccordent, au même point, plusieurs cloisons constituant une triangulation ou un maillage de l'ensemble.

L'invention a pour but de supprimer la difficulté ci-dessus par l'implantation d'un renfort métallique qui permette une liaison satisfaisante du renfort avec le matériau composite plus particulièrement dans l'assemblage d'un flan à des parois d'orientations diverses se raccordant sur ce flan.

Le renfort métallique selon l'invention pour l'implantation dans un nœud d'une structure en matériau composite de fibres et de résine pour favoriser la liaison entre un flan constitué de couches et des parois se raccordant sur ce flan, se caractérise en ce qu'il est formé par un assemblage de trois éléments comprenant un premier élément constitué par un cylindre à large embase se raccordant au flan de nœud, un deuxième élément coiffant le premier et muni d'ailettes ou nervures orientées suivant les parois à raccorder au flan et un troisième élément intermédiaire constitué par une rondelle interposée entre les deux premiers éléments et destinée à répartir la pression des ailettes ou nervures sur l'embase du premier élément.

Avantageusement, les faces de l'embase et de la rondelle s'étendant autour du cylindre, ou certaines de ces faces, présentent des aspérités ou gorges qui favorisent la liaison du renfort métallique avec le matériau composite de fibres et de résine.

Les revendications 3 et 4 concernent des modes particuliers de réalisation de l'invention.

Pour bien faire comprendre l'invention, on décrira plus particulièrement son application à une structure qui peut être celle d'une demi-coquille destinée à être assemblée avec une autre demi-coquille symétrique, l'assemblage s'effectuant par l'intermédiaire de renforts incorporés selon l'invention, dont un exemple d'application est illustré par le dessin annexé, dans lequel:

la figure 1 représente schématiquement, en vue de perspective éclatée, les éléments principaux de la structure destinés à être intimement reliés entre eux et avec le renfort métallique;

la figure 2 est une demi-coupe partielle montrant un détail de l'assemblage;

la figure 3 montre en perspective la jonction au matériau composite des différents éléments du renfort métallique représentés sur la figure 1; et

les figures 4 à 9 montrent des exemples de l'élément métallique avec des ailettes qui sont en nombre variable et qui présentent des orientations différentes.

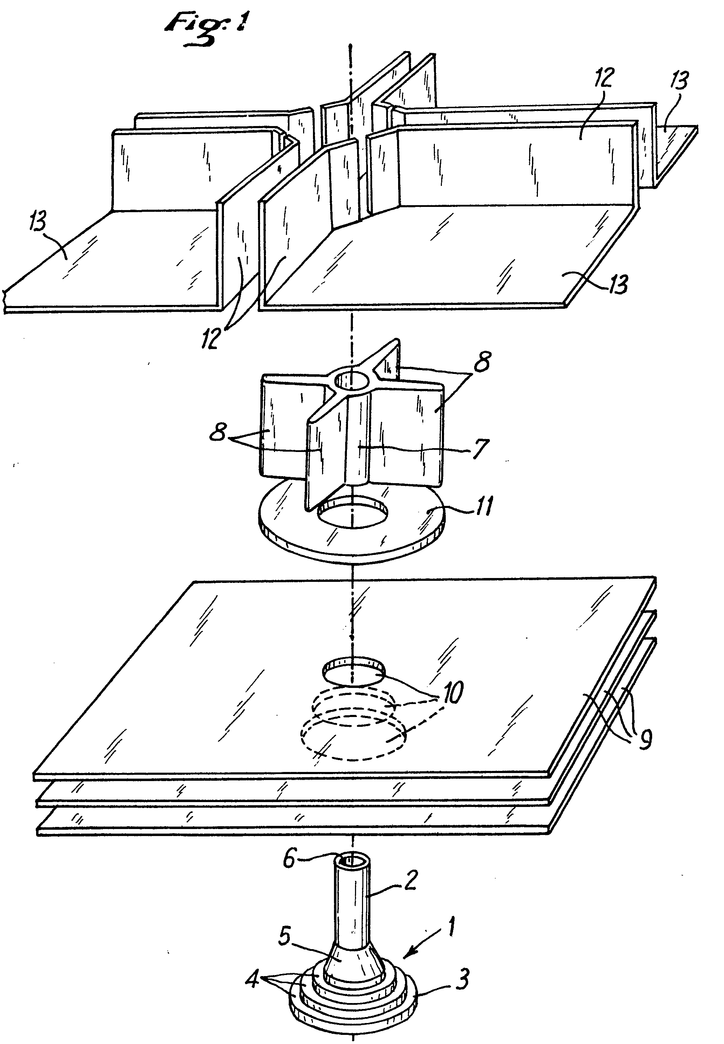

Sur la figure 1, on a indiqué en 1 l'élément mâle constituant le premier élément du renfort métallique. Cet élément comporte un cylindre 2 et une large embase 3 à étages 4 raccordée par un cône 5 au cylindre 2 dans l'axe duquel est prévu un alésage 6 qui s'étend de part en part à travers l'élément 1 pour le passage éventuel d'une tige (non représentée) permettant un assemblage avec une structure symétrique.

Le deuxième élément est constitué par l'élément femelle indiqué en 7 et destiné à coiffer l'élément 1, cet élément 7 présentant, autour d'un noyau central tubulaire, des ailettes 8 réparties et orientées selon le nombre et les directions des parois 12 qui se raccordent au flan joint au premier élément 1 du renfort et qui constituent la structure de l'assemblage. Les couches superposées destinées à former le flan de l'ossature sont indiquées en 9 et présentent des trous circulaires 10 correspondant aux diamètres des différents étages 4 de l'embase 3 de façon que chaque couche ait le maximum de surface de contact avec l'élément 1 du renfort métallique.

Le troisième élément du renfort métallique, indiqué en 11, est constitué par une rondelle emmanchée sur 2 de l'élément 1 et amenée en pression sur les couches 9 préalablement à la mise en place de l'élément femelle 7. Cette rondelle améliore les contacts entre le renfort et les couches 9 du matériau composite au moment de la polymérisation de la résine de ce matériau.

Dans l'exemple représenté sur la figure 1, les ailettes 8 sont orientées suivant les quatre parois composées de plusieurs couches de fibres-résine et constituées par des parties 12 destinées à être réunies entre elles et avec les ailettes respectives 8 ainsi que par des parties 13 destinées à être réunies au flan composé des couches 9.

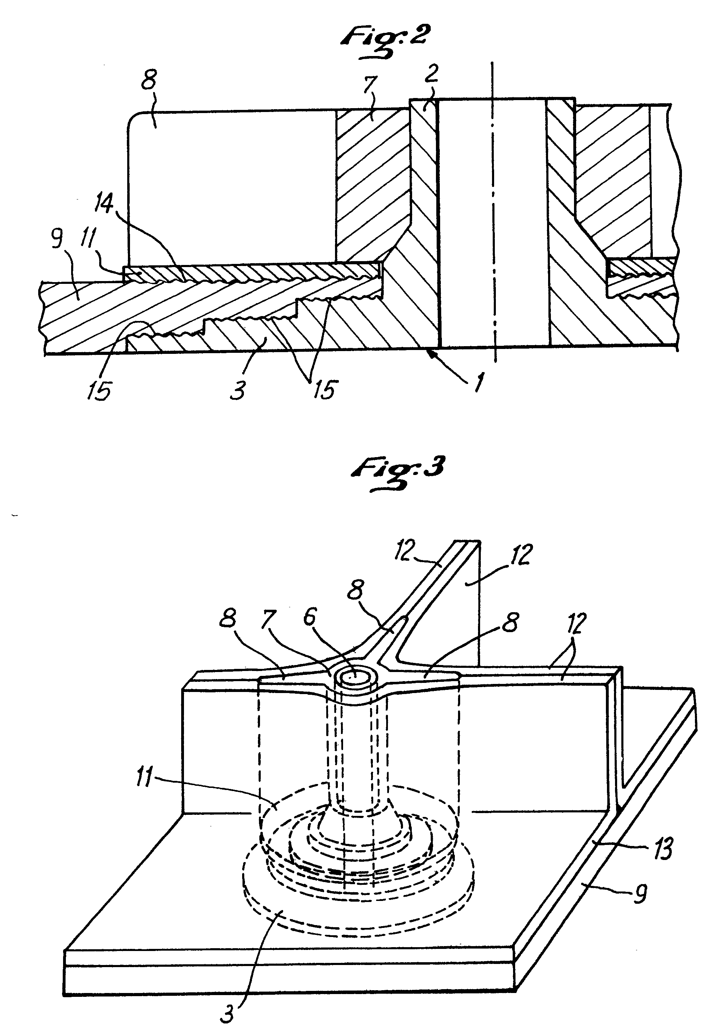

Les faces en regard de la rondelle 11 et des étages 4 de l'embase 3 présentent de préférence des aspérités ou gorges schématisées respectivement en 14 et 15 sur la figure 2. Ces aspérités ou gorges peuvent présenter différentes formes en fonction des efforts susceptibles d'être appliqués au renfort.

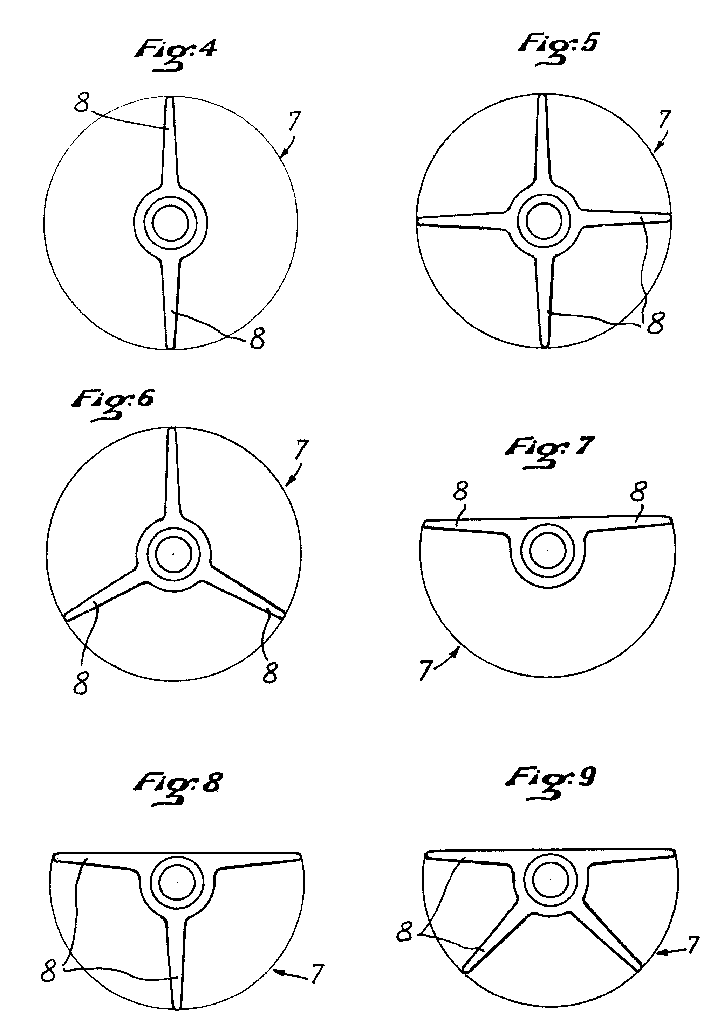

La figure 3 montre la réunion des éléments ci-dessus mais, pour faciliter la lecture du dessin, on y a supprimé l'ailette avant et la parois correspondante.

Sur les figures 4 à 9, on a représenté diverses formes qu'on peut donner à l'élément à ailettes 7 et on comprendra que les formes représentées, avec ailettes en nombre et de directions variables, n'ont aucun caractère limitatif.

Le renfort métallique en trois éléments permet dans un premier temps de placer et d'assembler correctement l'élément 1 et le flan composé des couches 9, ce qui donne une base de départ convenable et indispensable pour situer le deuxième élément 7 et les parois 12 et obtenir finalement l'ossature complète selon la configuration.

Comme on l'a indiqué ci-dessus, cette ossature peut constituer une demi-coquille destinée à être assemblée avec une autre demi-coquille symétrique de façon à former une poutre creuse nervurée intérieurement par les parois jointes aux ailettes des renforts métalliques. L'assemblage de ces deux demi-coquilles peut s'effectuer facilement de façon robuste à l'aide d'une vis ou d'un boulon dont la tige s'étend à travers l'alésage commun 6 des deux renforts symétriques utilisés.

**Revendications**

1. Renfort métallique pour l'implantation dans un nœud d'une structure en matériau composite de fibres et de résine pour favoriser la liaison entre un flan constitué de couches (9) et des parois (12) se raccordant sur ce flan, le maintien du renfort dans ledit nœud étant réalisé par polymérisation de la résine, caractérisé en ce qu'il est formé par un assemblage de trois éléments comprenant un premier élément (1) constitué par un cylindre (2) à large embase (3) se raccordant au flan du nœud, un deuxième élément (7) coiffant le premier et muni d'ailettes ou nervures (8) orientées suivant les parois (12) à raccorder au flan et un troisième élément intermédiaire constitué par une rondelle (11) interposée entre les deux premiers éléments et destinés à répartir la pression des ailettes ou nervures (8) sur l'embase (3) du premier élément.

2. Renfort métallique selon la revendication 1, caractérisé en ce que les faces de l'embase (3) et de la rondelle (11) s'étendant autour du cylindre (2) ou certaines de ces faces présentent des aspérités ou gorges (14, 15) qui favorisent la liaison du renfort métallique avec le matériau composite de fibres et de résine.

3. Renfort métallique selon la revendication 1 ou la revendication 2, caractérisé en ce que la large embase (3) comporte des étages (4) dont chacun coopère avec une couche (9) distincte du matériau composite constituant le flan, ces couches distinctes présentant des trous (10) correspondant aux différents étages (4) de l'embase (3).

4. Renfort métallique selon l'une quelconque des revendications 1 à 3, caractérisé par un cône (5) de raccordement entre le cylindre (2) et l'embase (3) du premier élément (1).

**Claims**

1. Metal reinforcing piece for the implantation in a node of a structure made of a composite fibre and resin material to facilitate the connection between a blank made up of layers (9) and walls (12) which are connected on this blank, the reinforcement piece being held in the said node by polymerisation of the resin, characterised in that it is formed by an assembly of three components comprising a first component (1) consisting of a cylinder (2) with a wide base (3) connected to the blank of the node, a second component (7) covering the first component and provided with fins or ribs (8) orientated in the direction of the walls (12) to be connected to the blank and a third intermediate component consisting of a washer (11) interposed between the first two components and designed to distribute the pressure of the fins or ribs (8) on the base (3) of the first component.

2. Metal reinforcing piece according to claim 1, characterised in that the faces of the base (3) and the washer (11) extending about the cylinder (2) or certain of its faces having rough parts or throats (14, 15) which facilitate the connecting of the metal reinforcing piece to the fibre and resin composite material.

3. Metal reinforcing piece according to claim 1 or claim 2, characterised in that the wide base (3) consists of stages (4) each of which relates to a different layer (9) of the composite material forming the blank, these different layers being provided with holes (10) corresponding to the different stages (4) of the base (3).

4. Metal reinforcement piece according to any one of claims 1 to 3, characterised by a forcing cone (5) between the cylinder (2) and the base (3) of the first component (1).

**Patentansprüche**

1. Metallische Verstärkung zum Einsetzen in den Knotenpunkt bzw. in die Verbindungsstelle einer Struktur aus einem aus Fasern und Harz bzw. Kunststoff gebildeten Verbundwerkstoff zur Verbesserung der Verbindung zwischen einem von einer Lage oder Schicht (9) gebildeten Zwischenteil bzw. Konstruktionsteil und daran anschliessenden Wänden (12), bei der die Verstärkung des Knotenpunkts durch Polymerisation bzw. Aushärtung des Harzes bzw. Kunststoffs entsteht, gekennzeichnet durch einen dreiteiligen Verbund mit einem ersten Element (1), das aus einem Zylinder (2) mit einem grossen Ansatz (3) zur Verbindung mit dem Konstruktionsteil besteht, mit einem zweiten Element (7) zum Um- bzw. Übergreifen des ersten Elements (1) mit Rippen bzw. Flügeln (8), die in Richtung der an das Konstruktionsteil anschliessenden Wänden (12) orientiert sind, und mit einem dazwischen angeordneten dritten Element, das durch eine runde Scheibe bzw. einen Ring (11) gebildet und zwischen die beiden erstgenannten Elemente eingesetzt ist und den Druck der Rippen bzw. Flügel (8) auf den Ansatz (3) des ersten Elements verteilt.

2. Metallische Verstärkung nach Anspruch 1, dadurch gekennzeichnet, dass sich die Flächen des Ansatzes (3) und des Rings (11) um den Zylinder (2) erstrecken und/oder einige dieser Flächen gerauhte Abschnitte oder Auskehlungen (14, 15) aufweisen, welche die Verbindung zwischen der Metallverstärkung und dem aus Fasern und Harz bzw. Kunststoff bestehenden Verbundwerkstoff begünstigen.

3. Metallische Verstärkung nach Anspruch 1 oder 2, dadurch gekennzeichnet, dass der grosse Ansatz (3) in Stufen bzw. Etagen (4) ausgebildet ist, von denen jede mit einer bestimmten Lage bzw. Schicht (9) des Verbundwerkstoffs des Konstruktionsteils zusammenwirkt, und dass die betreffenden Schichten (9) Löcher (10) aufweisen, die den betreffenden Etagen (4) des Ansatzes (3) entsprechen.

4. Metallische Verstärkung nach einem der Ansprüche 1–3, dadurch gekennzeichnet, dass ein Passkegel bzw. ein Konus (5) zwischen dem Zylinder (2) und dem Ansatz (3) des ersten Elements (1) angeordnet ist.

**Fig. 1**

*Fig. 2*

*Fig. 3*

### Fig:4

### Fig:5

### Fig:6

### Fig:7

### Fig:8

### Fig:9